# EUROPÄISCHE PATENTSCHRIFT

(11) **EP 2 160 854 B1**
(45) Veröffentlichungstag und Bekanntmachung des Hinweises auf die Patenterteilung: **10.11.2010**
(21) Anmeldenummer: 08749442.3
(22) Anmeldetag: 13.05.2008
(51) Int. Cl.: H04W 24/08

(54) **Verfahren zum Erzeugen einer auf einem Testgerät zum testen eines Mobilfunkgeräts abspielbaren Signalfolge**
Method for generating a signal train which can be played back on a tester for testing a mobile radio
Procédé pour générer une séquence de signaux pouvant être lue sur un testeur pour tester un appareil radioélectrique mobile

(30) Priorität: 27.06.2007 DE 102007029712; 21.02.2008 DE 102008010288
(43) Veröffentlichungstag der Anmeldung: 10.03.2010
(73) Patentinhaber: Rohde & Schwarz GmbH & Co. KG, 81671 München (DE)
(72) Erfinder: HUBER, Rolf, 82256 Fürstenfeldbruck (DE); SANDHÄGER, Stephan, 82110 Germering (DE); SCHATZ, Walter, 85635 Höhenkirchen (DE)
(74) Vertreter: Beder, Jens
(86) Internationale Anmeldenummer: PCT/EP2008/003818
(87) Internationale Veröffentlichungsnummer: WO 2009/000368

(56) Entgegenhaltungen:
- WO-A-95/15630
- US-A- 5 943 617
- US-B1- 6 819 924

## Beschreibung

Die Erfindung betrifft ein Verfahren zum Erzeugen einer auf einem Testgerät zum Testen eines Mobilfunkgeräts abspielbaren Signalfolge.

In der Regel werden Mobilfunkgeräte im Hinblick auf ihr Verhalten in einem Funknetz in einer Laborumgebung getestet. Hierzu werden die Mobilfunkgeräte mit Hilfe eines Testgeräts getestet. Dieses Testgerät emuliert eine Basisstation zu einem bestimmten Mobilfunkstandard. Dementsprechend werden durch das Testgerät Signalfolgen erzeugt, die im Idealfall einer im realen Betrieb erzeugten Signalfolge und somit dem Sendesignal einer Basisstation entsprechen. In der Regel werden diese Signalfolgen erzeugt, indem eine Abfolge von Befehlen programmiert wird und auf Basis dieser Befehlsfolge das Testgerät das Testsignal erzeugt. Die Befehlsfolge besteht also aus Steuerbefehlen, die das Testgerät ansteuern.

Um einen möglichst realitätsnahen Test zu ermöglichen, kann die Befehlsfolge auch aus Informationen erzeugt werden, welche aus einem realen Funknetz oder aus einem Labor-Interoperabilitätstest gewonnen werden. So offenbart beispielsweise das Dokument WO 95/15630 A1 ein Verfahren zum Erzeugen einer auf einem Testgerät zum Testen eines Mobilfunkgeräts abspielbaren Signalfolge. Hierzu können auf einer Messfahrt mittels eines Testmobilfunkgeräts die Kommunikation mit einer gemäß einem Mobilfunkstandard mit dem Testmobilfunkgerät kommunizierenden Basisstation aufgezeichnet werden. Die Informationen, die aus den aufgezeichneten Signalfolgen der Basisstation gewonnen werden, dienen als Basis, um die Befehlsfolgen zum Ansteuern des Testgeräts zu erzeugen. Problematisch dabei ist allerdings, dass die von der Basisstation im realen Betrieb erzeugten Signale zumindest teilweise von dem zur Aufzeichnung verwendeten Testmobilfunkgerät abhängen. Dadurch können Signale mit aufgezeichnet werden, die beim Testen eines abweichenden Mobilfunkgeräts nicht oder in anderer Form auftreten würden. Umgekehrt können andere Mobilfunkgeräte Informationen benötigen, die ihnen die Basisstation bei einer standardkonformen Registrierung übermitteln würde, die durch das Testmobilfunkgerät aber nicht ausgelöst werden. Im Sinne der Erfindung versteht man unter einem Testmobilfunkgerät oder präparierten Mobilfunkgerät ein Mobilfunkgerät, welches in der Lage ist, über eine Schnittstelle Informationen über zwischen der Basisstation und dem Mobilfunkgerät übertragene Nachrichten sowie weitere Informationen über das Funkfeld auszugeben.

Die Verwendung einer solchen Signalfolge zum Generieren der Befehlsfolge zur Ansteuerung des Testgeräts würde zu einer durch das Testgerät erzeugten Signalfolge führen, die keine Kommunikation mit dem zu testenden Mobilfunkgerät erlaubt. Die Befehlsfolge ist daher im Sinne der vorliegenden. Erfindung nicht abspielbar, das heißt, dass es zu keiner oder einer fehlerhaften Kommunikation zwischen dem zu testenden Mobilfunkgerät und dem Testgerät führen kann.

Es ist daher die Aufgabe der vorliegenden Erfindung, ein Verfahren zum Erzeugen einer auf einem Testgerät zum Testen eines Mobilfunkgeräts abspielbaren Signalfolge zu schaffen.

Die Aufgabe wird durch das erfindungsgemäße Verfahren mit den Merkmalen des Anspruchs 1 gelöst.

Zunächst wird eine Befehlsfolge, die zum Abspielen auf einem Testgerät vorgesehen ist und somit letztlich die Basis für die von dem Testgerät erzeugte Signalfolge bildet, analysiert. Die Analyse erfolgt dabei im Hinblick auf die durch das Testgerät erzeugte Signalfolge. Diese sich aus der Befehlsfolge ergebende Signalfolge wird durch Vergleich mit einer standardkonformen Signalfolge überprüft, um Abweichungen von einer standardkonformen Signalfolge erkennen zu können. Dabei kann sich der Vergleich auf Minimalanforderungen beschränken, die durch den Standard definiert sind und eine Kommunikation zwischen dem Testgerät und dem zu testenden Mobilfunkgerät ermöglichen. Werden bei dieser Überprüfung Abweichungen zwischen der standardkonformen Signalfolge und der sich aus der Befehlsfolge ergebenden Signalfolge ermittelt, so werden daraus umgekehrt die in der Befehlsfolge notwendigen Änderungen abgeleitet. Diese Änderungen, die notwendig sind, um eine Befehlsfolge zu erhalten, auf deren Basis eine standardkonforme Signalfolge durch das Testgerät erzeugt wird, werden dann durch Ergänzen von fehlenden Befehlen oder Befehlsfolgeabschnitten und/oder Ersetzen von einzelnen Befehlen oder Befehlsfolgenabschnitten umgesetzt. Letztlich wird so eine abspielbare Befehlsfolge erzeugt.

In den Unteransprüchen sind vorteilhafte Weiterbildungen des erfindungsgemäßen Verfahrens ausgeführt.

So kann die Befehlsfolge z. B. programmiert sein. Durch programmierte Befehlsfolgen, die der weiteren Analyse der Befehlsfolge mit der Ermittlung fehlender oder zu ersetzender Befehle zugrunde liegt, ist es insbesondere möglich, Szenarien zu realisieren, die ein reales Funknetz nur selten zeigt. Andererseits kann es gemäß einer alternativen bevorzugten Ausführungsform vorteilhaft sein, die Befehlsfolge aus gemessenen Funksignalen eines realen Funknetzes zu generieren. Dabei wird durch eine Messfahrt die zur Nachbildung des Funknetzes oder der zugrundeliegenden Laborumgebung notwendige Information aufgenommen. Hierzu kann beispielsweise ein Netzwerkscanner sowie ein präpariertes Mobilfunkgerät dienen, durch welche Informationen über die von Basisstationen gesendeten Sendesignale ermittelt werden. Mit Hilfe einer Konvertierungseinrichtung wird aus diesen ermittelten Daten des realen Funknetzes automatisch eine Folge von Befehlen zur Ansteuerung des Testgeräts erzeugt. Die Anwendung des erfindungsgemäßen Verfahrens ist insbesondere im Zusammenhang mit solchen real aufgenommenen Funkszenarien vorteilhaft.

Besonders bevorzugt ist es, wenn die zur Ansteuerung des Testgeräts vorgesehene Befehlsfolge daraufhin überprüft wird, ob die Befehlsfolge beim Ausführen zu einer Signalfolge führt, die durch das Testgerät ausgegeben wird, welche eine Registrierungssequenz für ein Mobilfunkgerät enthält. Dies ist insbesondere dann vorteilhaft, wenn aus einem aufgezeichneten realen Funknetz lediglich ein zeitlich begrenztes Intervall zur Simulation herausgegriffen wird. In einem solchen Fall ist die Wahrscheinlichkeit hoch, dass eine Registrierung des zu testenden Mobilfunkgeräts beziehungsweise des bei der Aufzeichnung ursprünglich verwendeten Testmobilfunkgeräts, in der ausgewählten Folge von Signalen nicht enthalten ist. In diesem Fall kann jedoch eine Überprüfung des zu testenden Mobilfunkgeräts nicht erfolgen, da eine Kommunikation zwischen dem Testgerät und dem zu testenden Mobilfunkgerät nicht zustande kommt.

Vorzugsweise wird bei Erkennen des Fehlens einer Registrierung ein entsprechender Befehlsfolgenabschnitt automatisch ergänzt und der überprüften Befehlsfolge vorangestellt. Durch das Voranstellen wird sichergestellt, dass sämtliche für den Ablauf des Tests vorgesehenen Befehle nach der Registrierung des zu testenden Mobilfunkgeräts stehen und damit Teil der durchzuführenden Tests sind.

Weiterhin ist es bevorzugt, solche Befehle oder Befehlsfolgenabschnitte der Befehlsfolge, welche im realen Netz genutzte Sicherheitsalgorithmen betreffen, zu ersetzen. Das Ersetzen erfolgt dabei durch Befehle beziehungsweise Befehlsfolgenabschnitte welche standardisierte Testsignalfolgen erzeugen. Durch die Nutzung solcher standardisierter Testsignalfolgen wird dem Umstand Rechnung getragen, dass bei der Aufzeichnung proprietäre Algorithmen der jeweiligen Netzbetreiber eingesetzt werden. Dies betrifft insbesondere unterschiedliche Sicherheitsalgorithmen. Um einen Test überhaupt durchführen zu können, ist es daher erforderlich, die entsprechenden Sequenzen der Befehlsfolge durch Standardsequenzen zu ersetzen. Bei der Ermittlung der Abspielbarkeit einer Befehlsfolge wird daher das Vorhandensein von solchen Sicherheitsalgorithmen überprüft und die entsprechende Befehlsfolge beziehungsweise der Befehlsfolgenabschnitt durch einen Standardbefehlsfolgenabschnitt ersetzt.

Während z. B. bei fehlender Registrierungssequenz eine vollständige Sequenz zur Registrierung eines Mobilfunkgeräts ergänzt wird, können in einer vorhandenen Registrierungssequenz auch lediglich Inhalte der einzelnen Befehle ersetzt werden. Diese können z. B. die zur Authentifizierung verwendeten Schlüssel betreffen. Im Sinne der vorliegenden Erfindung wird in diesem Zusammenhang vom Ersetzen eines Befehls gesprochen.

Ein bevorzugtes Ausführungsbeispiel ist in der Figur dargestellt und wird in der nachfolgenden Beschreibung näher erläutert. Es zeigen:
- Fig. 1: eine schematische Darstellung zur Erläuterung des Ablaufs beim Testen eines Mobilfunkgeräts unter Nutzung des erfindungsgemäßen Verfahrens; und
- Fig. 2: ein stark vereinfachtes Diagramm zum Ablauf des erfindungsgemäßen Verfahrens.

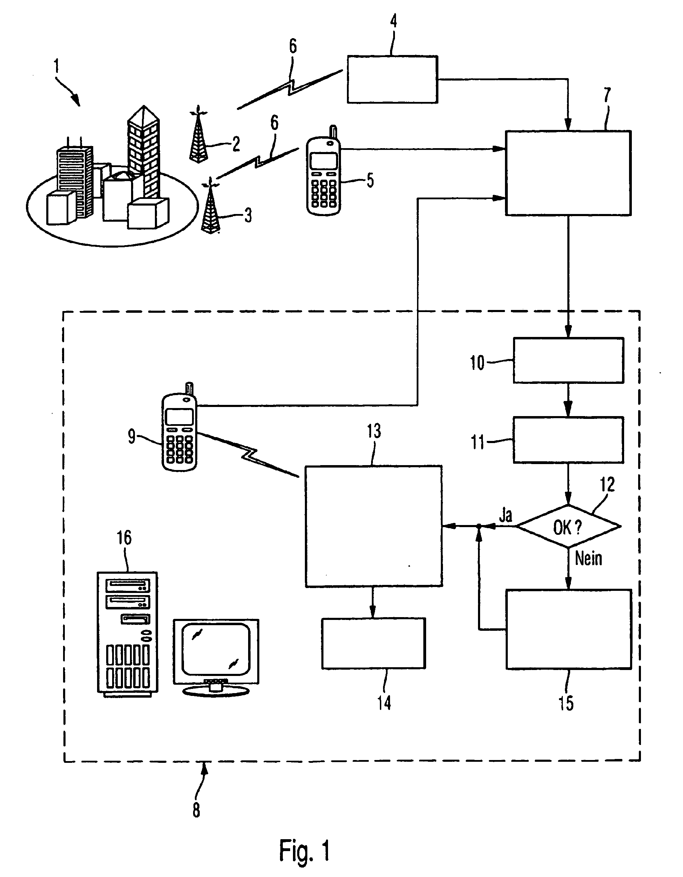

Die Fig. 1 zeigt schematisch die bevorzugte Durchführung eines Tests für Mobilfunkgeräte. Eine reale Umgebung 1 dient zunächst zur Gewinnung von Daten, welche nachfolgend der Simulation eines Funknetzes zugrunde gelegt werden. Das reale Umfeld 1 enthält mehrere Basisstationen 2, 3 wobei in der Regel mehr als eine Basisstation gleichzeitig im Empfangsbereich eines Mobilfunkgeräts liegt. Da Mobilfunkgeräte nur eine begrenzte Analyse von komplexeren Funknetzen ermöglichen, werden Daten über das zu simulierende Funknetz vorzugsweise sowohl mit einem Netzwerkscanner 4 als auch mit einem Testmobilfunkgerät 5 aufgezeichnet. Beide Geräte stehen mit den Basisstationen über eine Funkschnittstelle 6 in Verbindung. Das Testmobilfunkgerät 5 ist dabei so eingerichtet, dass es in einem regulären Betrieb mit der Basisstation 2 beziehungsweise 3 steht und sich wie ein normales, im Netz angemeldetes Mobilfunkgerät in dem Funknetz verhält. Das heißt, es ist zunächst eine Registrierung im Funknetz erforderlich, bevor zwischen dem Mobilfunkgerät 5 und den Basisstationen 2, 3 Daten ausgetauscht werden können.

Der Netzwerkscanner 4 steht dagegen mit den Basisstationen 2, 3 lediglich passiv in Verbindung. Durch ihn werden Daten aufgezeichnet, welche die von in ihrer Funktion stark beschränkten Empfangsteile von Mobilfunkgeräten nicht liefern können. Beispielsweise ist der Netzwerkscanner 4 in der Lage schnell auch Leistungen in Frequenzbereichen zu ermitteln, welche außerhalb der zur Mobilfunkverbindung benutzten Frequenzbereiche liegen, die das Mobilfunkgerät 5 verwendet.

Die so ermittelten Daten des Netzwerkscanners 4 und des Mobilfunkgeräts 5 werden zunächst in einer Datenerfassungseinheit 7 gespeichert. Die dort gespeicherten Daten geben Aufschluss über die jeweils von den Basisstationen 2, 3 beziehungsweise auch von anderen möglicherweise störenden Sendern emittierte Funksignale. Diese Funksignale bestehen aus Signalfolgen. Dabei ist insbesondere zu beachten, dass die Signalfolgen auch solche Signalfolgen beinhalten können, die in Reaktion auf ein von dem Testmobilfunkgerät 5 gesendetes Antwortsignal beinhalten.

Die Daten und damit die Informationen über die von den Basisstationen 2, 3 gesendeten Signalfolgen und über zurückgesendete Antwortsignale des Testmobilfunkgeräts 3 werden an eine Konvertierungseinrichtung 10 übermittelt. Diese Konvertierungseinrichtung 10 erzeugt aus den Daten beziehungsweise den Signalfolgen, die auch die Informationen über von dem Testmobilfunkgerät 5 zurückgesendete Antwortsignale enthalten, in eine Befehlsfolge konvertiert. Dabei wird in der Regel lediglich ein Teil der Daten, die bei der Messfahrt aufgezeichnet wurden verwendet. Diese Daten werden beispielsweise durch Selektion eines Zeitfensters der Messfahrt ermittelt. Die Konvertierungseinrichtung 10 erzeugt dann auch lediglich zu diesem Zeitintervall eine Befehlsfolge. Bei der Konvertierung werden die Befehle zur Ansteuerung eines Testgeräts in ein Format gebracht, welches durch das Testgerät lesbar ist. Bevorzugt ist es allerdings, zunächst aus sämtlichen aufgezeichneten Informationen eine Befehlsfolge zu erzeugen. Die Auswahl lediglich eines Abschnitts kann dann durch Selektion eines Teils der durch eine vorangegangene Konvertierung erhaltenen Befehlsfolge erfolgen.

Mittels einer Überprüfungseinrichtung 11 wird die so erzeugte Befehlsfolge auf ihre Abspielbarkeit überprüft. Unter einer abspielbaren Befehlsfolge wird dabei eine solche Befehlsfolge verstanden, welche zu einer durch das Testgerät zu erzeugenden Signalfolge führt, die zum Aufbau und Unterhalten einer standardkonformen Verbindung mit dem Mobilfunkgerät 9 geeignet ist. Das Mobilfunkgerät 9 ist dabei ein zu testendes Mobilfunkgerät und kann daher abweichende Reaktionen zu den Reaktionen auf die Sendesignale im Vergleich zu dem Testmobilfunkgerät 5 zeigen.

Bei der Überprüfung der Befehlsfolge durch eine Überprüfungseinheit 11 wird das auf Basis der Befehle durch das Testgerät 13 erzeugte Sendesignal mit einem standardkonformen Sendesignal desselben Mobilfunkstandards verglichen. Dabei wird insbesondere überprüft, ob das aus der Befehlsfolge erzeugte Sendesignal eine Registrierungssequenz enthält. Eine solche Registrierung ist zunächst erforderlich, um überhaupt eine Mobilfunkverbindung zwischen dem zu testenden Mobilfunkgerät 9 und dem Testgerät 13 aufzubauen.

Ferner wird durch die Überprüfungseinrichtung 11 die Befehlsfolge daraufhin überprüft, ob proprietäre Sicherheitsalgorithmen vorhanden sind, wie sie bei der Verwendung eines Testmobilfunkgeräts 5 eines bestimmten Typs sowie einer bestimmten SIM (subscriber identity module) bei der Registrierung durch einen Netzbetreiber beispielsweise auftreten. Werden durch die Überprüfungseinheit 11 solche proprietären Sicherheitsalgorithmen erkannt, so wird der betreffende Befehlsfolgenabschnitt ermittelt und durch einen alternativen Befehlsfolgenabschnitt ersetzt. Dieser alternative Befehlsfolgenabschnitt enthält einen Standardalgorithmus, welcher in nicht spezifischer Weise geeignet ist, eine vergleichbare Sicherheitsabfrage mit jedem zu testenden Mobilfunkgerät 9 durchzuführen. Auch das Mobilfunkgerät 9 wird mit einem Standard-SIM ausgerüstet, um eine Verbindung zu dem das Funknetz simulierende Testgerät 13 aufbauen zu können. Durch die Verwendung der Standard-SIM wird verhindert, dass sich das zu testende Mobilfunkgerät in einem realen Netz einbucht.

Die Überprüfung der aus der Befehlsfolge zu erzeugenden Signalfolge mit einer standardkonformen Signalfolge ist in der Figur 1 schematisch durch die Abfrage 12 dargestellt. Ergibt die Abfrage 12, dass alle erforderlichen Befehle und damit alle erforderlichen Bestandteile der Signalfolge vorhanden sind, so wird die Befehlsfolge an das Testgerät 13 weitergeleitet.

Es ist selbstverständlich auch möglich, eine solche nun als abspielbar identifizierte Befehlsfolge auch zu speichern und zu einem späteren Zeitpunkt dem Testgerät 13 zuzuführen. Das Testgerät 13 ist dann in der Lage, auf Basis der Befehlsfolge Sendesignale zu erzeugen und mit dem zu testenden Mobilfunkgerät 9 zu kommunizieren.

Wird dagegen bei der Abfrage 12 erkannt, dass die Befehlsfolge unvollständig ist und beispielsweise die Registrierung in dem aus der Befehlsfolge erzeugten Sendesignal fehlt, so werden durch eine Analyseeinheit 15 die in der Befehlsfolge zum Erzeugen einer abspielbaren Befehlsfolge noch fehlenden Befehle oder Befehlsfolgenabschnitte ermittelt und automatisch der Befehlsfolge hinzugefügt. Auf diese Weise entsteht wiederum eine abspielbare Befehlsfolge, die von der Analyseeinrichtung 15 dem Testgerät 13 zugeführt wird. Ein Befehlsfolgenabschnitt ist eine Mehrzahl zusammengehörender Befehle, die aufeinanderfolgend auftreten. Solche Befehlsfolgenabschnitte können vordefiniert abgespeichert sein.

Ebenfalls durch die Analyseeinrichtung 15 wird ermittelt, ob bestimmte Befehle ersetzt werden müssen. Dies war vorstehend bereits im Bezug auf Sicherheitsalgorithmen beschrieben worden. Das Auswählen der für die jeweiligen Sicherheitsalgorithmen beziehungsweise die entsprechenden Sendesignale verantwortlichen Befehle erfolgt wiederum in der Analyseeinrichtung 15. Werden solche Befehle oder Befehlsfolgenabschnitte durch die Analyseeinrichtung 15 identifiziert, so werden sie automatisch durch Standardbefehle beziehungsweise Standardbefehlsfolgenabschnitte ersetzt. Die so überarbeitete nun abspielbare Befehlsfolge wird dann wiederum entweder einem Speicher oder aber unmittelbar dem Testgerät 13 zugeführt. Das Testgerät 13 steht überdies mit einer Auswerteeinheit 14 in Verbindung, durch welche das Testergebnis ermittelt wird. Durch das Testgerät 13 und die mit dem Mobilfunkgerät 9 aufgebaute bidirektionale Verbindung kann die Reaktion des Mobilfunkgeräts 9 erfasst und zur weiteren Verarbeitung der Auswerteeinrichtung 14 zugeführt werden. Wie es beispielhaft durch die schematisch dargestellte Computereinrichtung 16 angedeutet ist, kann das erfindungsgemäße Verfahren vorzugsweise mittels eines Computerprogramms durchgeführt werden.

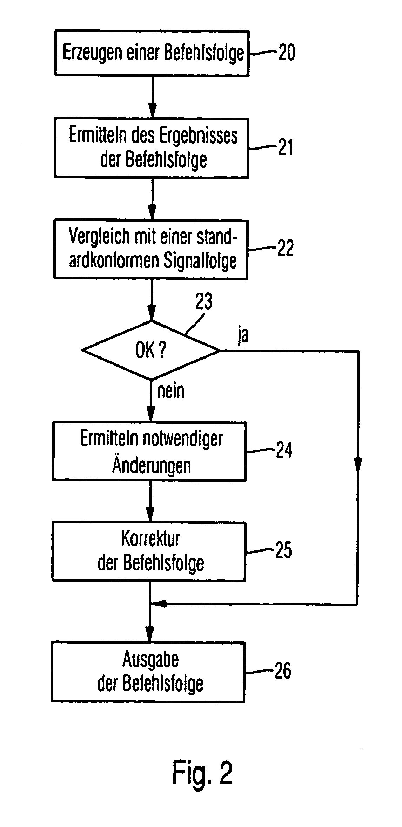

In der Fig. 2 ist noch einmal eine vereinfachte Darstellung zum Ablauf des erfindungsgemäßen Verfahrens gezeigt. Zunächst wird in Schritt 20 eine Befehlsfolge erzeugt. Die Befehlsfolge kann dabei durch eine Messfahrt oder aber Programmierung erzeugt werden. Im nächsten Schritt 21 wird das Ergebnis dieser Befehlsfolge ermittelt, welches sich bei dem Versuch des Abspielens der Befehlsfolge auf dem Testgerät 13 ergibt. Es wird sozusagen das von dem Testgerät 13 auf Basis der erzeugten Befehlsfolge zu erzeugende Sendesignal beziehungsweise die Signalfolge simuliert. Es erfolgt anschließend ein Vergleich mit einer standardkonformen Signalfolge (Schritt 22), also einem Sendesignal welches tatsächlich geeignet ist, eine Verbindung mit dem zu testenden Mobilfunkgerät 9 aufzubauen. In Schritt 23 wird die Übereinstimmung mit einer solchen standardkonformen Signalfolge abgefragt. Liegt eine Übereinstimmung vor, so wird die Befehlsfolge ausgegeben. Wird dagegen festgestellt, dass die Standardsignalfolge von der simulierten Signalfolge abweicht, so wird der Grund für die Abweichung ermittelt. Es werden die zum Erzeugen einer abspielbaren Befehlsfolge notwendigen Änderungen an der Befehlsfolge ermittelt (Schritt 24). Die Ermittlung liefert so schließlich die Befehle oder Befehlsfolgenabschnitte, die ergänzt oder ersetzt werden müssen, um eine abspielbare Befehlsfolge zu erhalten, welche der standardkonformen Signalfolge entspricht.

Die ursprünglich erzeugte Befehlsfolge wird dann durch Ergänzen der ermittelten zu ergänzenden Befehle oder durch Ersetzen der ermittelten zu ersetzenden Befehle korrigiert (Schritt 25), so dass nunmehr eine abspielbare Befehlsfolge vorliegt. Diese korrigierte, nun abspielbare Befehlsfolge wird ebenfalls in Schritt 26 ausgegeben.

Die Erfindung ist nicht auf das dargestellte Ausführungsbeispiel beschränkt. Insbesondere sind auch einzelne Merkmale des Ausführungsbeispiels in vorteilhafter Weise miteinander kombinierbar.

## Patentansprüche

1. Verfahren zum Erzeugen einer auf einem Testgerät zum Testen eines Mobilfunkgeräts abspielbaren Signalfolge mit folgenden Verfahrensschritten:
- Analysieren der gegebenen Befehlsfolge im Hinblick auf eine daraus durch das Testgerät (13) erzeugte Signalfolge (21),
- Prüfen der sich aus der Befehlsfolge ergebenden Signalfolge durch Vergleichen mit einer standardkonformen Signalfolge (22),
- Feststellen von Abweichungen zwischen einer standardkonformen Signalfolge und der sich aus der Befehlsfolge ergebenden Signalfolge (23)
- Ermitteln der notwendigen Änderungen der Befehlsfolge zum Erzeugen einer standardkonformen Signalfolge (24)
- Ergänzen und/oder Ersetzen von Befehlen der Befehlsfolge entsprechend der festgestellten notwendigen Änderungen (25) und
- Erzeugen einer abspielbaren, korrigierten Befehlsfolge.

2. Verfahren nach Anspruch 1,
**dadurch gekennzeichnet,**
**dass** die Befehlsfolge zunächst programmiert ist.

3. Verfahren nach Anspruch 1,
**dadurch gekennzeichnet,**
**dass** die Befehlsfolge aus gemessenen Funksignalen eines realen Funknetzes (1) automatisch generiert wird.

4. Verfahren nach Anspruch 3,
**dadurch gekennzeichnet,**
**dass** zunächst Signalfolgen zumindest einer Basisstation (2, 3) mittels eines Testmobilfunkgeräts (5) aufgezeichnet werden und aus den von der Basisstation (2, 3) gesendeten Signalfolge die Befehlsfolge generiert wird.

5. Verfahren nach einem der Ansprüche 1 bis 4,
**dadurch gekennzeichnet,**
**dass** die Existenz einer die Registrierung eines Mobilfunkgeräts (9) betreffenden sich aus der Befehlsfolge ergebenden Signalfolge überprüft wird (22).

6. Verfahren nach Anspruch 5,
**dadurch gekennzeichnet,**
**dass** bei Fehlen eines die Registrierung betreffenden Befehlsfolgenabschnitts ein solcher Befehlsfolgenabschnitt der gegebenen Befehlsfolge vorangestellt wird.

7. Verfahren nach einem der Ansprüche 1 bis 6,
**dadurch gekennzeichnet,**
**dass** Befehle und/oder Befehlsfolgenabschnitte der Befehlsfolge, die aus solchen realen Signalen und/oder Signalfolgen erzeugt wurden, die im realen Netz genutzte Sicherheitsalgorithmen betreffen, durch Befehle und/oder Befehlsfolgenabschnitte ersetzt werden, die standardisierte Testsignalfolgen erzeugen.

8. Verfahren nach einem der Ansprüche 1 bis 7,
**dadurch gekennzeichnet,**
**dass** zum Durchlauf notwendige Befehle zu der Befehlsfolge ergänzt werden.

9. Computerprogramm mit Programmcode-Mitteln, um alle Schritte gemäß einem der Ansprüche 1 bis 8 durchführen zu können, wenn das Programm auf einem Computer oder einem digitalen Signalprozessor ausgeführt wird.

10. Computerprogramm-Produkt mit auf einem maschinenlesbaren Datenträger gespeicherten Programmcode-Mitteln, um alle Schritte gemäß einem der Ansprüche 1 bis 8 durchführen zu können, wenn das Programm auf einem Computer oder einem digitalen Signalprozessor ausgeführt wird.

## Claims

1. A method for generating a signal train capable of being played back on a test device for testing a mobile radio device with the following method steps:
- analysis of the given instruction sequence with regard to a signal train generated from this by the test device (13) (21);
- checking the signal train resulting from the instruction sequence by comparison with a standardised signal train (22);
- determination of deviations between a standardised signal train and the signal train resulting from the instruction sequence (23);
- determination of the necessary changes of the instruction sequence in order to generate a standardised signal train (24);
- completion and/or replacement of instructions of the instruction sequence corresponding to the determined, necessary changes (25); and
- generation of a corrected instruction sequence capable of being played back.

2. The method according to claim 1,
**characterised in that**
the instruction sequence is initially programmed.

3. The method according to claim 1,
**characterised in that**
the instruction sequence is generated automatically from measured radio signals of a real radio network (1).

4. The method according to claim 3,
**characterised in that**
initially, signal trains of at least one base station (2, 3) are recorded by means of a test mobile-radio device (5), and the instruction sequence is generated from the signal train transmitted by the base station (2, 3).

5. The method according to any one of claims 1 to 4,
**characterised in that**
the existence of a signal train resulting from the instruction sequence relating to the registration of a mobile-radio device (9) is checked (22).

6. The method according to claim 5,
**characterised in that,**
in the absence of an instruction-sequence portion relating to the registration, such an instruction-sequence portion is placed in front of the given instruction sequence.

7. The method according to any one of claims 1 to 6,
**characterised in that**
instructions and/or instruction-sequence portions of the instruction sequence, which has been generated from such real signals and/or signal trains, which relate to security algorithms used in the real network, are replaced by instructions and/or instruction-sequence portions, which generate standardised test signal trains.

8. The method according to any one of claims 1 to 7,
**characterised in that**
instructions necessary for the execution are added to the instruction sequence.

9. A computer program with program code means in order to implement all of the steps according to any one of claims 1 to 8, when the program is executed on a computer or a digital signal processor.

10. A computer program product with program code means stored on a machine-readable data carrier, in order to implement all of the steps according to any one of claims 1 to 8, when the program is executed on a computer or a digital signal processor.

## Revendications

1. Procédé pour générer une séquence de signaux pouvant être lue sur un appareil test pour tester un appareil de téléphonie mobile comprenant les étapes de procédé suivantes:
- analyse de la séquence d'instructions donnée par rapport à une séquence de signaux (21) générée à partir de là par l'appareil test (13),
- examen de la séquence de signaux (22) résultant de la séquence d'instructions par comparaison avec une séquence de signaux (22) conforme au standard,
- détermination d'écarts entre une séquence de signaux conforme au standard et la séquence de signaux (23) résultant de la séquence d'instructions,
- détermination des modifications nécessaires de la séquence d'instructions pour générer une séquence de signaux (24) conforme au standard,
- complément et/ou remplacement d'instructions de la séquence d'instructions en fonction des modifications (25) nécessaires constatées et
- génération d'une séquence d'instructions pouvant être lue et corrigée.

2. Procédé selon la revendication 1,
**caractérisé en ce que**
la séquence d'instructions est programmée pour commencer.

3. Procédé selon la revendication 1,
**caractérisé en ce que**
la séquence d'instructions est générée automatiquement à partir de signaux radio mesurés d'un réseau radio (1) réel.

4. Procédé selon la revendication 3,
**caractérisé en ce que,**
pour commencer, des séquences de signaux d'au moins une station de base (2, 3) sont enregistrées au moyen d'un appareil de téléphonie mobile test (5) et la séquence d'instructions est générée à partir de la séquence de signaux envoyée par la station de base (2, 3).

5. Procédé selon l'une quelconque des revendications 1 à 4,
**caractérisé en ce que**
l'existence d'une séquence de signaux concernant l'enregistrement d'un appareil de téléphonie mobile (9) et résultant de la séquence d'instructions est contrôlée (22).

6. Procédé selon la revendication 5,
**caractérisé en ce que,**
en l'absence d'une partie de séquence d'instructions concernant l'enregistrement, une telle partie de séquence d'instructions donnée est placée en tête.

7. Procédé selon l'une quelconque des revendications 1 à 6,
**caractérisé en ce que**
des instructions et/ou des parties de séquence d'instructions de la séquence d'instructions, qui sont générées à partir de tels signaux réels et/ou séquences de signaux, qui concernent des algorithmes de sécurité utilisées dans le réseau réel, sont remplacées par des instructions et/ou des parties de séquence d'instructions qui génèrent des séquences de signaux test standardisées.

8. Procédé selon l'une quelconque des revendications 1 à 7,
**caractérisé en ce que**
des instructions nécessaires pour le passage concernant la séquence d'instructions sont complétées.

9. Programme informatique comprenant des moyens de code de programme pour effectuer toutes les étapes selon l'une quelconque des revendications 1 à 8, lorsque le programme est exécuté sur un ordinateur ou un processeur de signaux numériques.

10. Produit de programme informatique comprenant des moyens de code de programme mémorisés sur un support de données pouvant être lu à la machine, pour pouvoir effectuer toues les étapes selon l'une quelconque des revendications 1 à 8, lorsque le programme est exécuté sur un ordinateur ou un processeur de signaux numériques.
